# EUROPÄISCHE PATENTSCHRIFT

(11) **EP 3 341 284 B1**
(45) Veröffentlichungstag und Bekanntmachung des Hinweises auf die Patenterteilung: **15.07.2020**
(21) Anmeldenummer: 16757562.0
(22) Anmeldetag: 26.08.2016
(51) Int. Cl.: B63H 9/06, B64C 31/06

(54) **PROFIL FÜR GLEITSCHIRM, LENKDRACHEN, KITE ODER SEGEL**
PROFILE FOR CANOPY, STEERED KITE, KITE OR SAIL
PROFIL POUR PARAPENTE, CERF-VOLANT DIRIGEABLE, KITE OU VOILE

(30) Priorität: 28.08.2015 DE 202015006085 U
(43) Veröffentlichungstag der Anmeldung: 04.07.2018
(73) Patentinhaber: Istec AG, DE-82290 Landsberied (DE)
(72) Erfinder: WÖRL, Günther, 82290 Landsberied (DE)
(74) Vertreter: Laufhütte, Dieter
(86) Internationale Anmeldenummer: PCT/EP2016/001451
(87) Internationale Veröffentlichungsnummer: WO 2017/036587

(56) Entgegenhaltungen:
- WO-A1-2004/048192
- DE-A1- 1 756 574
- DE-A1-102009 009 305
- Flysurfer Kiteboarding: "Flysurfer Kiteboarding - PEAK - Main Features", , 25. Oktober 2013 (2013-10-25), Seiten 1-3, XP054976780, Gefunden im Internet: URL:https://www.youtube.com/watch?v=sYYtdK 9IdFk [gefunden am 2016-09-25]

## Beschreibung

Die Erfindung betrifft ein Segel, bestehend aus einem Obersegel und einem Untersegel sowie aus ein Profil bildenden Profilrippen.

Das Profil, welches auch als Schirmkappe bezeichnet werden kann, soll sich entsprechend der vorliegenden Erfindung auf beliebige Profile beziehen, wie sie beispielsweise bei Gleitschirmen, Lenkdrachen, Kites oder auch Segeln verwendet werden. Dabei sollen auch entsprechende Profile für Modelle, also beispielsweise Gleitschirmmodelle, beinhaltet sein. In gleicher Weise sind Segel beim Einsatz in Segelbooten, wie sie beispielsweise unter der Bezeichnung Parasailor bekannt wurden, umfasst.

Mit dem Begriff Schirm, beispielsweise als Gleitschirm, wird regelmäßig als Oberbegriff die vollständige Ausrüstung bezeichnet, also beispielsweise die Ausrüstung zum Gleitschirm, die im Wesentlichen aus einem Profil oder einer Schirmkappe, beispielsweise dem Gleitschirmprofil bzw. der Gleitschirmkappe, besteht, die durch die Leinen mit dem den Piloten aufnehmenden Gurtzeug verbunden ist. Das Profil weist jeweils eine zumindest einlagige, sehr häufig auch zweilagige Tragfläche auf, die zumindest ein Obersegel, sehr häufig aber ein Ober- und ein Untersegel aufweist und oftmals aus einem Nylonstoff angefertigt ist. Zur Profilgebung sind zwischen Ober- und Untersegel senkrecht stehende Profilrippen eingearbeitet, die den gesamten Innenraum des Profils in eine Vielzahl von in Flugrichtung parallel zueinander liegenden Kammern unterteilt.

Optimale Flugeigenschaften bzw. eine optimale Auftriebserzeugung stellt sich bei einer tragflächenähnlichen Profilgebung des Profils bzw. der Schirmkappe ein. An der Vorderkante des Profils, auch als Anströmkante bezeichnet, sind ein oder mehrere Eintrittsöffnungen angeordnet, über die während der Flugphase Luft ins Profilinnere gelangt und dort angestaut wird. Der resultierende Überdruck im Kammerinneren sorgt für die gewünschte Profilgebung.

Ein Gleitflügel zum Tragen und Führen einer Last während des Absinkens des Flügels ist z.B. aus DE1756574 bekannt.

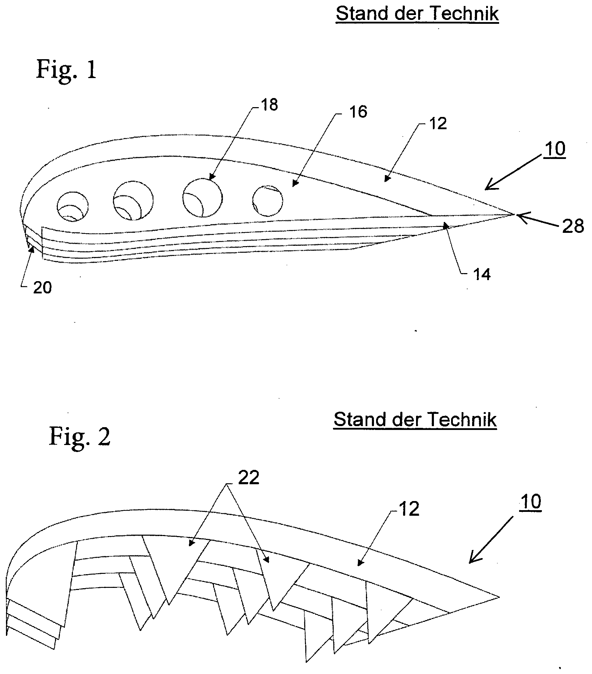

In der beigefügten Figur 1 ist ein Standardprofil nach dem Stand der Technik gezeigt, wie es beispielsweise bei Gleitschirmen und Kites sowie bei dem Flügelsegel "Parasailor" entsprechend der deutschen Patentanmeldung DE 199 01 649 A1 verwendet wird. Das Profil besteht hier aus einem Obersegel 10 und einem Untersegel 14, die durch Profilrippen 16 verbunden sind. Zur besseren Querdurchströmung sind die Profilrippen 16 mit Öffnungen 18 versehen. Die Füllung des Profils erfolgt über eine Öffnung im Bereich der Anströmkante 20. Derartige Profile haben den Vorteil, dass sie ein sauberes Profil ausbilden und eine hohe aerodynamische Wirkung entfalten. Nachteilig sind hier der hohe Material- und Fertigungsaufwand.

Der Figur 2 ist ein ebenfalls aus dem Stand der Technik bekanntes Profil mit einfacher Oberseite dargestellt, welches auch als Einfachsegel bezeichnet wird. Dieses Profil wird ebenfalls bei Gleitschirmen und Kites sowie bei dem Flügelsegel, welches unter der Bezeichnung "Parasail" vertrieben wird, eingesetzt. Hier wird lediglich ein Obersegel 12 über einfache Profilsegmente 22 an den hier nicht näher dargestellten Leinen befestigt. Die Profilsegmente sind hier in Form von Dreiecken ausgebildet. Ein Untersegel ist bei dieser Ausführungsvariante nicht vorhanden. Dadurch entsteht bei diesem Profil kein innerer Staudruck und auch keine Querdurchströmung. Naturgemäß hat diese Ausführungsvariante den Vorteil eines geringen Material- und Fertigungsaufwandes. Nachteilig sind aber die Flugeigenschaften, da hier kein Staudruck aufgebaut wird und keine Querstabilisierung erfolgt. Die aerodynamische Wirkung dieses Profils ist insgesamt schlechter als diejenige gemäß dem Profil nach Figur 1.

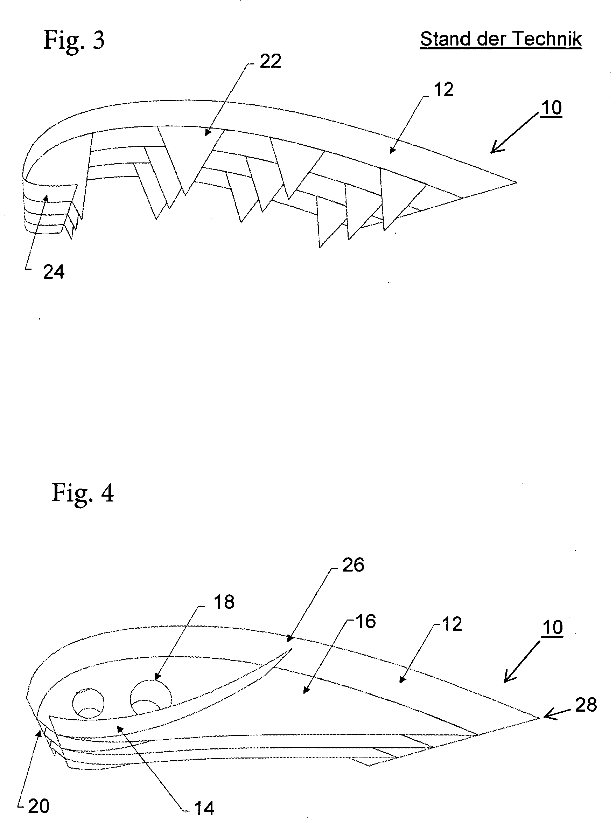

Schließlich ist in Figur 3 ein ebenfalls aus dem Stand der Technik bekanntes Profil gezeigt, das im Wesentlichen ein Einfachsegel entsprechend Figur 2 darstellt, wobei hier allerdings im Bereich der Anströmkante eine ausgeprägte Formgebung in Form einer ausgeprägten Anströmkante 24 gebildet ist. Derartige Profile, die ebenfalls nur ein Einfachsegel in Form eines Obersegels 12 aufweisen und ansonsten auch nur die Rippensegmente 22 enthalten, werden bei einigen Gleitschirmvarianten eingesetzt.

Aufgabe der vorliegenden Erfindung ist es, die Vorteile beider Profilvarianten miteinander zu verbinden und ein Profil für Segel zu schaffen, welches einerseits gute Flugeigenschaften und eine große Querstabilität aufweist, dabei aber andererseits möglichst wenig Material benötigt und auch mit möglichst geringem Fertigungsaufwand hergestellt werden kann.

Erfindungsgemäß wird diese Aufgabe durch ein Segel mit einem Profil gemäß Anspruch 1 gelöst.

Demnach ist erfindungsgemäß ein Segel vorgeschlagen, welches aus einem Obersegel und einem Untersegel besteht sowie aus profilbildenden Profilrippen. Das Untersegel des Profils verläuft erfindungsgemäß jedoch nicht bis zur Profilhinterkante, sondern überspannt nur einen Teilbereich der gesamten Profillänge.

Durch diese Lösung wird eine wesentlich höhere Flugstabilität im Vergleich zu einem Einfachsegel gemäß der Figuren 2 und 3 erzielt. Zum anderen ist aufgrund des nur teilweise vorzusehenden Untersegels der Fertigungsaufwand und der Materialeinsatz entscheidend verringert.

Bevorzugte Ausgestaltungen der Erfindung ergeben sich aus den dem Hauptanspruch anschließenden Unteransprüchen. Demnach können die Profilrippen mindestens eine Öffnung aufweisen, was zu einer besseren Querdurchströmung über die Länge des Profils und damit eine erhöhte Querstabilisierung führt.

Im Bereich der Abströmkante ist mindestens eine Öffnung vorgesehen, wodurch die Befüllung des teilweise geschlossenen Profils mit Luft ermöglicht wird.

Gemäß einer weiteren vorteilhaften Ausgestaltung der Erfindung ist am Ende des Untersegels mindestens eine Öffnung angeordnet. Hierdurch wird eine Entleerung des Segels bzw. eine Entlüftung des Profils beispielsweise beim Bergen des Segels oder des Gleitschirms wesentlich erleichtert.

Vorteilhaft sind die Profilrippen im Bereich des Profils, welcher nicht vom Untersegel abgedeckt ist, als Profilrippensegmente ausgebildet.

Gemäß einer besonders vorteilhaften Ausgestaltung kann das Untersegel kreisförmig ausgestaltet sein.

Eine weitere besondere Ausgestaltung der Erfindung sieht vor, dass mehrere Profilsegmente mit mindestens zwei Ober- und mindestens einem Untersegel gebildet sind.

Gemäß einer besonderen Ausgestaltung der Erfindung können hier zwei Obersegel und zwei zugeordnete Untersegel vorhanden sein.

Verschiedene Bereiche des Profils, wie beispielsweise die Anströmkante, Leinenansatzpunkte, sowie die Profilhinterkante, können vorteilhaft mit Verstärkungen versehen sein, die vorzugsweise aus steiferem Material und/oder aus stabilisierenden Elementen, wie Stäben, Rohren etc. bestehen.

Eine weitere Lösung der eingangs definierten Aufgabe, die jedoch lediglich Segel betrifft, besteht aus einem Obersegel und einem Untersegel sowie aus einem profilbildenden Profilrippen gemäß Anspruch 10, wobei das Untersegel des Profils nur als Segment ausgebildet ist und so nur einen Teilbereich der gesamten Profillänge überspannt. Dabei ist das Untersegelsegment im Wesentlichen im Bereich der Profilhinterkante ausgebildet.

Zusätzlich kann vorteilhaft eine Profilnase ausgeformt sein.

Schließlich betrifft die Erfindung einen Segel mit den zuvor dargestellten Merkmalen.

Weitere Merkmale, Einzelheiten und Vorteile der Erfindung werden anhand eines in der Zeichnung dargestellten Ausführungsbeispiels näher erläutert.

Es zeigen:
- Die Figuren 1 bis 3:: schematische Schnitte durch Profile nach dem Stand der Technik,
- Figuren 4 bis 13:: Profile gemäß unterschiedlicher Ausführungsformen der vorliegenden Erfindung, wie sie bei Gleitschirmen, Lenkdrachen, Kites oder Segel zum Einsatz kommen und
- Figuren 14 und 15:: erfindungsgemäße Profile, wie sie bei Segeln zur Anwendung kommen.

Figur 4 zeigt eine dreidimensionale Ansicht eines geschnittenen Profils 10 in gefüllter Phase, also im flugfähigen Zustand. Das Profil 10 weist ein Obersegel 12 und ein Untersegel 14 auf. Des Weiteren sind das Profil ausbildende Profilrippen 16 vorhanden. Wie im hier dargestellten Ausführungsbeispiel gezeigt, ist das Untersegel 14 nicht bis zur Profilhinterkante 28 durchgezogen, sondern überdeckt nur einen Teilbereich der gesamten Profillänge. Es endet ca. in der Hälfte des Obersegels 12, wie aus der Darstellung gemäß Figur 4 im Einzelnen zu sehen ist. Die Profilrippen 16 sind zur besseren Querdurchströmung mit sogenannten Cross Ports oder Öffnungen 18 versehen. Die Füllung des Profils erfolgt über eine Öffnung im Bereich der Anströmkante 20. Am Ende des Untersegels 14 sind ebenfalls Öffnungen 26 vorhanden, die eine einfachere Entleerung bzw. Entlüftung des Profils, beispielsweise beim Bergen des Gleitschirms oder Segels ermöglichen.

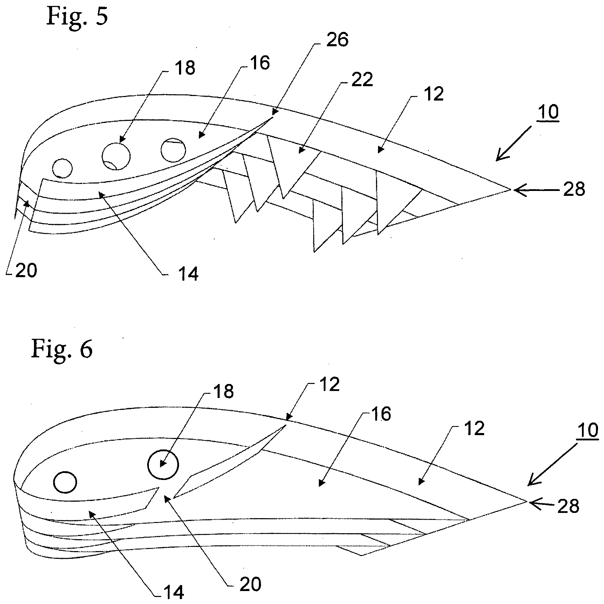

In Figur 5 ist ein Profil 10 dargestellt, das im Wesentlichen demjenigen nach Figur 4 entspricht. Jedoch sind in dem Teil des Obersegels 12, welcher nicht vom Untersegel 14 überdeckt wird, die Rippen als Rippensegmente 22 ausgeführt. Diese Rippensegmente weisen eine Dreiecksform auf und dienen im Wesentlichen zum Aufnehmen der Leinen.

In hier nicht näher dargestellter Art und Weise können bestimmte Bereiche des Profils, nämlich die Anströmkante 20, die Leinenansatzpunkte (beispielsweise 22) oder auch das Profilende 28 mit Verstärkung versehen werden. Diese können aus steiferem Material, beispielsweise Dacron oder Mylar, oder aus stabilisierenden Elementen, wie Stäben und Rohren bestehen.

Eine weitere alternative Ausführungsform im Rahmen der Erfindung ergibt sich aus der Figur 6. Hier ist ein Profil 10 gezeigt, das im Wesentlichen demjenigen gemäß Figur 4 entspricht. Jedoch ist hier die Eintrittsöffnung 20 im Vergleich wesentlich nach hinten, das heißt in Richtung der Profilhinterkante, verlegt. Diese mit voll ausgeführten Rippen 16 dargestellte Ausführungsvariante kann auch analog zu der Ausführungsvariante nach Figur 5 mit Rippensegmenten ausgeführt werden.

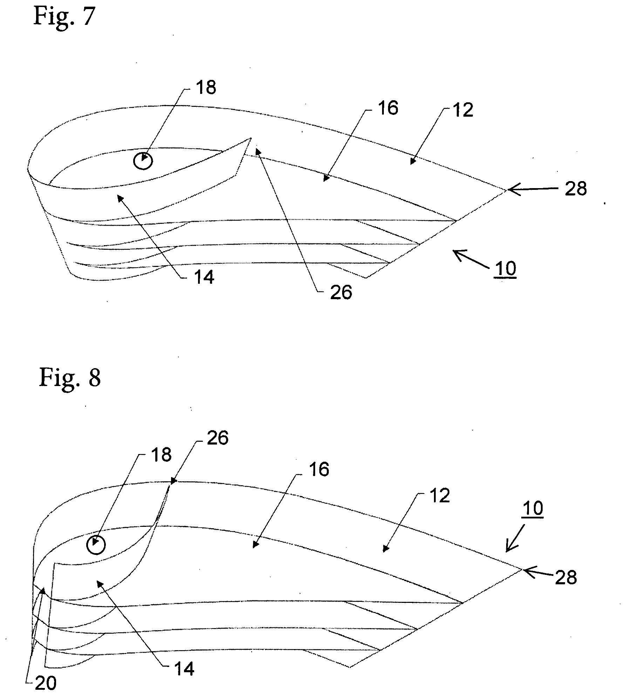

In der Ausführungsform nach Figur 7 ist ebenfalls ein Profil 10 gemäß der Erfindung dargestellt, bei dem die Öffnung 26 am Ende des Untersegels als Eintrittsöffnung für die Luft dient. Auch hier können analog zu der Figur 5 Rippensegmente 22 anstelle der Profilrippen 16 vorgesehen werden.

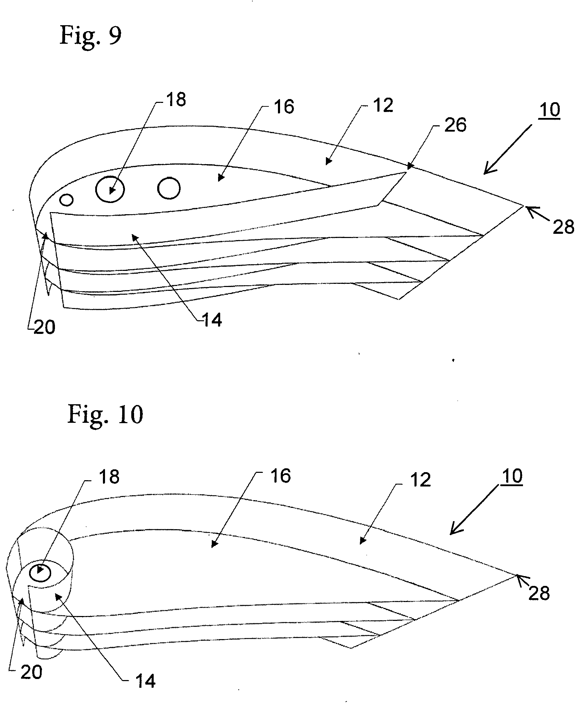

Die Ausführungsform gemäß der Erfindung nach Figur 8 entspricht im Wesentlichen derjenigen gemäß Figur 4, wobei das Untersegel 14 jedoch kürzer ausgeführt ist. Dagegen ist in der Ausführungsvariante gemäß Figur 9 das Untersegel 14 vergleichsweise länger ausgeführt.

Die Ausführungsvariante gemäß Figur 10 zeichnet sich dadurch aus, dass das Untersegel 14 kreisförmig gebildet ist.

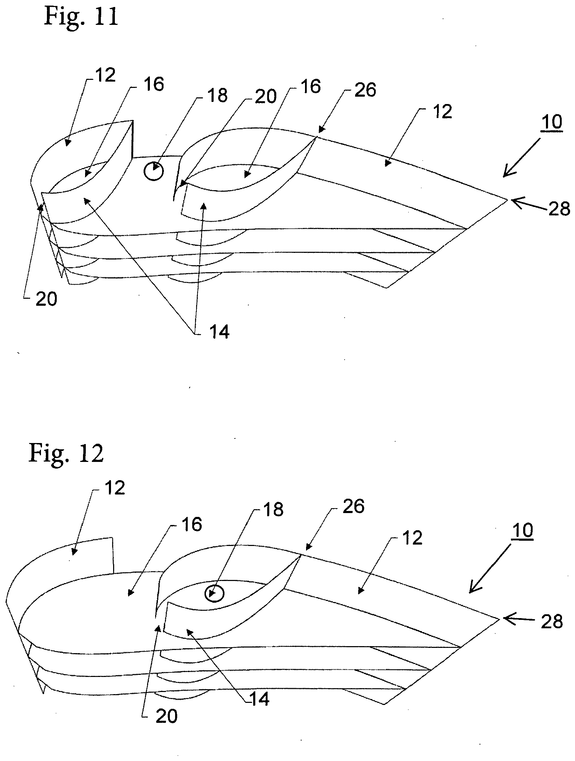

Besonders vorteilhaft ist die Ausführung gemäß der Figur 11, bei der beispielhaft zwei Profilelemente im Profil 10 ausgebildet sind. Hier sind jeweils pro Profilelement ein Obersegel 12 und ein Untersegel 14 vorhanden. Zwischen den beiden Profilelementen ist ein Zwischenbereich offengelassen, der lediglich von den Profilrippen 16 begrenzt wird, jedoch nicht von dem Obersegel 12 oder dem Untersegel 14. Anstelle der durchgehenden Profilrippen 16 können auch hier Rippensegmente in den Bereichen, in denen die Untersegel 14 nicht ausgebildet sind, vorgesehen sein.

Die Ausführungsform gemäß Figur 12 zeigt eine Abwandlung zu derjenigen gemäß Figur 11. Die Abwandlung besteht hier darin, dass im Bereich des ersten vorderen Obersegels 12 kein Untersegel 14 vorhanden ist. Hier ist lediglich ein Untersegel 14 im Bereich des zweiten Untersegels 12 vorhanden, welches aber wiederum nicht bis zur Profilhinterkante 28 geführt ist. Die übrigen Merkmale entsprochenen denjenigen der zuvor beschriebenen Ausführungsformen.

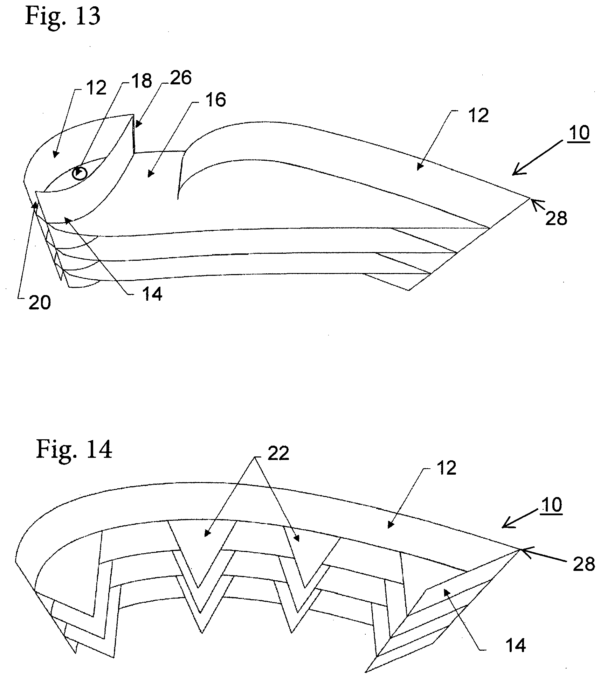

In Figur 13 ist eine andere alternative Ausführungsform derjenigen gemäß Figur 11 gezeigt. Hier ist nur im Bereich des vorderen Obersegels 12 ein Untersegel 14 ausgebildet. Dagegen ist im Bereich des hinteren Obersegels 12 kein Untersegel vorhanden. Auch hier können die Profilrippen 16 alternativ in nicht dargestellter Art und Weise als Rippensegmente ausgebildet sein.

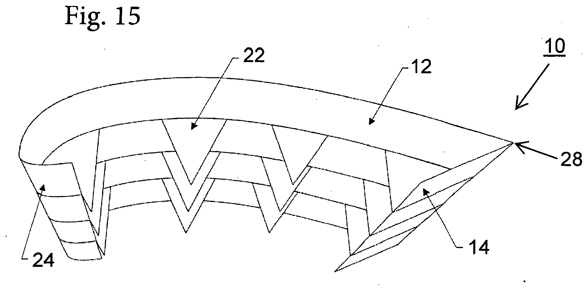

Die Ausführungsformen gemäß der Figuren 14 und 15 sind Profilvarianten, die erfindungsgemäß lediglich für Segel Verwendung finden. Hier ist jeweils ein Obersegel 12 vorhanden, an welchem Rippensegmente 22 angeordnet sind. Diese Rippensegmente sind, wie auch in den anderen Ausführungsformen beispielhaft dreieckig geformt. Im hier dargestellten Ausführungsbeispiel nach Figur 14 ist im Bereich der Profilhinterkante 28 ein Untersegelsegment 14 ausgebildet. Dieses weist aber nur einen vergleichsweise kleinen Flächenbereich auf.

Die Ausführungsform gemäß Figur 15 entspricht derjenigen gemäß Figur 14, wobei hier allerdings im Bereich der Anströmkante eine Profilnase 24 ausgebildet ist, die eine ausgeprägte Anströmkante bildet.

## Patentansprüche

1. Segel mit einem Profil (10) bestehend aus einem Obersegel (12) und einem Untersegel (14) sowie aus ein Profil bildenden Profilrippen (16), und wobei im Bereich der Anströmkante (20) eine Öffnung vorgesehen ist,
**dadurch gekennzeichnet,**
**dass** das Untersegel (14) des Profils (10) nicht bis zur Profilhinterkante (28) verläuft, sondern nur einen Teilbereich der gesamten Profillänge überspannt und dass im Bereich der Anströmkante (20) eine Öffnung vorgesehen ist.

2. Segel nach Anspruch 1, **dadurch gekennzeichnet, dass** die Profilrippen (16) mindestens eine Öffnung aufweisen.

3. Segel nach einem der Ansprüche 1oder 2, **dadurch gekennzeichnet, dass** am Ende des Untersegels (14) mindestens eine Öffnung angeordnet ist.

4. Segel nach Anspruch einem der Ansprüche 1 - 3, **dadurch gekennzeichnet, dass** die Profilrippen (16) im Bereich des Profils, welcher nicht vom Untersegel (14) abgedeckt ist, als Profilrippensegmente (22) ausgebildet sind.

5. Segel nach einem der vorhergehenden Ansprüche, **dadurch gekennzeichnet, dass** das Untersegel (14) kreisförmig ausgestaltet ist.

6. Segel nach einem der vorhergehenden Ansprüche, **dadurch gekennzeichnet, dass** mehrere Profilsegmente mit zwei Ober- (12) und mindestens einem Untersegel (14) gebildet sind.

7. Segel nach Anspruch 6, **dadurch gekennzeichnet, dass** entsprechend der beiden Obersegel (12) zwei Untersegel (14) vorhanden sind.

8. Segel nach einem der vorherigen Ansprüche, **dadurch gekennzeichnet, dass** verschiedene Bereich, wie die Anströmkante (20), Leinenansatzpunkte, die Profilhinterkante (28), mit Verstärkungen versehen sind, die vorzugsweise aus steiferem Material und/oder aus stabilisierenden Elementen wie Stäben, Rohren etc. bestehen.

## Claims

1. Sail with a profile (10) consisting of an upper sail (12) and a lower sail (14) as well as profile ribs (16) forming a profile and wherein an opening is provided in the region of the leading edge (20),
**characterised in that**
the lower sail (14) of the profile (10) does not run to the profile trailing edge (28), but only spans a partial region of the overall profile length and that an opening is provided in the region of the leading edge (20).

2. Sail according to claim 1, **characterised in that** the profile ribs (16) comprise at least one opening.

3. Sail according to one of claims 1 or 2, **characterised in that** at least one opening is arranged at the end of the lower sail (14).

4. Sail according to one of claims 1 to 3, **characterised in that** the profile ribs (16) in the region of the profile that is not covered by the lower sail (14) are designed as profile rib segments (22).

5. Sail according to any one of the preceding claims, **characterised in that** the lower sail (14) is configured to be circular.

6. Sail according to any one of the preceding claims, **characterised in that** multiple profile segments are formed with two upper sails (12) and at least one lower sail (14).

7. Sail according to claim 6, **characterised in that** two lower sails (14) are present corresponding to the two upper sails (12).

8. Sail according to any one of the preceding claims, **characterised in that** various regions, such as the leading edge (20), line attachment points, the profile trailing edge (28), are provided with reinforcements, which preferably consist of stiffer material and/or of stabilising elements such as bars, tubes etc.

## Revendications

1. Voile ayant un profil (10) constitué d'un extrados (12) et d'un intrados (14) ainsi que de nervures de profil (16) formant un profil, et dans laquelle une ouverture est prévue dans la zone du bord d'attaque (20),
**caractérisée en ce que**
l'intrados (14) du profil (10) ne s'étend pas jusqu'au bord de fuite du profil (28), mais couvre uniquement une partie de la longueur totale du profil et **en ce qu'**une ouverture est prévue dans la zone du bord d'attaque (20).

2. Voile selon la revendication 1, **caractérisée en ce que** les nervures de profil (16) comportent au moins une ouverture.

3. Voile selon l'une des revendications 1 et 2, **caractérisée en ce qu'**au moins une ouverture est située à l'extrémité de l'intrados (14).

4. Voile selon l'une des revendications 1 à 3, **caractérisée en ce que**, dans la zone du profil qui n'est pas couverte par l'intrados (14), les nervures de profil (16) sont réalisées sous la forme de segments de nervure de profil (22).

5. Voile selon l'une des revendications précédentes, **caractérisée en ce que** l'intrados (14) est conçu de forme circulaire.

6. Voile selon l'une des revendications précédentes, **caractérisée en ce que** plusieurs segments de profil sont formés avec deux extrados (12) et au moins un intrados (14).

7. Voile selon la revendication 6, **caractérisée en ce que**, de manière correspondante aux deux extrados (12), il y a deux intrados (14).

8. Voile selon l'une des revendications précédentes, **caractérisée en ce que** différentes zones, telles que le bord d'attaque (20), des points de raccord de lignes, le bord de fuite du profil (28), sont pourvues de renforts, qui sont de préférence constitués d'un matériau plus rigide et/ou d'éléments stabilisateurs comme des baguettes, des tubes, etc.
